# EUROPEAN PATENT SPECIFICATION

(11) **EP 3 943 732 B1**
(45) Date of publication and mention of the grant of the patent: **12.02.2025**
(21) Application number: 21170781.5
(22) Date of filing: 27.04.2021
(51) Int. Cl.: F02C 3/22

(54) **ENGINE USING HEATED AND TURBO-EXPANDED AMMONIA FUEL**
MOTOR MIT EINEM ERWÄRMTEN UND TURBOEXPANDIERTEN AMMONIAKKRAFTSTOFF
MOTEUR UTILISANT UN COMBUSTIBLE D'AMMONIAC CHAUFFÉ ET TURBO-EXPANSÉ

(30) Priority: 27.04.2020 US 202016858858
(43) Date of publication of application: 26.01.2022
(73) Proprietor: RTX Corporation, Farmington, CT 06032 (US)
(72) Inventor: SMITH, Lance L., West Hartford, 06117 (US); COCKS, Peter A. T., South Glastonbury, 06073 (US); STAUBACH, Joseph B., Colchester, 06415 (US)
(74) Representative: Dehns

(56) References cited:
- WO-A1-2017/160154
- US-A- 4 999 993
- US-A1- 2012 096 869
- US-A1- 2012 301 814
- US-A1- 2020 088 102

## Description

### BACKGROUND

A gas turbine engine typically mixes a carbon based fuel with air within a combustor where it is ignited to generate a high-energy exhaust gas flow. The high-energy exhaust gas flow includes carbon that is eventually exhausted into the environment. Alternative engine structures and fuels may aid in the reduction and/or elimination of carbon emissions. One such alternative fuel is ammonia. Ammonia requires non-traditional storage structures and systems to practically leverage positive environmental and performance aspects.

Turbine engine manufacturers continue to seek further improvements to engine performance including improvements to reduce environmental impact while improving propulsive efficiencies

Document US 2020/088102 A1 discloses a prior art turbine engine.

### SUMMARY

According to a first aspect of the present invention, there is provided an energy extraction system as set forth in claim 1.

In a further embodiment of the foregoing, the energy extraction system further includes a liquid pump that is configured to increase a pressure of the liquid ammonia fuel to a pressure that is greater than a pressure of the liquid ammonia fuel in the ammonia fuel storage tank.

In a further embodiment of any of the foregoing, the ammonia fuel storage tank assembly is configured to store the liquid ammonia fuel under a temperature and pressure that is different than an ambient temperature and pressure.

In a further embodiment of any of the foregoing, the energy extraction system further includes a liquid pump that is configured to increase a pressure of the liquid ammonia fuel to a first pressure that is greater than a pressure of the liquid ammonia fuel in the ammonia fuel storage tank. The first pressure is greater than a pressure of the vaporized ammonia based fuel that is communicated to the combustor.

In a further embodiment of any of the foregoing, the thermal transfer assembly is in communication with a core flow to the turbine.

In a further embodiment of any of the foregoing, the thermal transfer assembly is configured to heat the ammonia fuel to decompose at least a portion of the ammonia fuel into hydrogen and nitrogen.

In a further embodiment of any of the foregoing, the thermal transfer assembly is disposed before the turbo-expander.

In a further embodiment of any of the foregoing, the energy conversion device includes a fuel cell that is configured to generate electric power to drive an electric motor.

According to a further aspect of the present invention, there is provided a method of operating an energy extraction system as set forth in claim 9.

In a further embodiment of any of the foregoing, the method includes pressurizing the ammonia fuel in the liquid form to a first pressure greater than a pressure of the ammonia fuel stored in a fuel storage tank.

In a further embodiment of any of the foregoing, the method includes transforming the ammonia fuel within a thermal transfer assembly in thermal communication with a heat source.

In a further embodiment of any of the foregoing, the method includes transforming the ammonia fuel in liquid form within a thermal transfer assembly in thermal communication with a core flow.

In a further embodiment of any of the foregoing, the method includes decomposing at least a portion of the ammonia fuel into hydrogen and nitrogen with exposure to heat in the thermal transfer assembly.

Although the different examples have the specific components shown in the illustrations, embodiments of this invention are not limited to those particular combinations.

These and other features disclosed herein can be best understood from the following specification and drawings, the following of which is a brief description.

### BRIEF DESCRIPTION OF THE DRAWINGS

Figure 1 is a schematic view of an example ammonia fuel powered turbine engine.
Figure 2 is a schematic view of another example ammonia fuel powered turbine engine.
Figure 3 is a schematic view of ammonia fuel powered engine assembly including a fuel cell.

### DETAILED DESCRIPTION

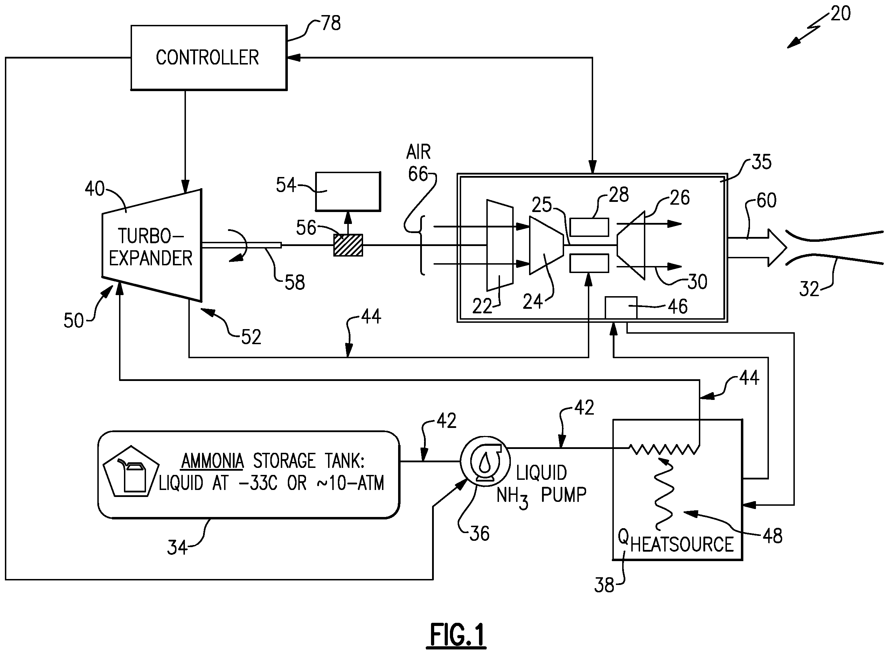

Figure 1 schematically illustrates one example disclosed alternate fueled turbine engine assembly 20. The engine assembly 20 uses a vaporized ammonia based fuel mixed with a core gas flow 66 in a combustor 28 to generate a high energy gas flow 30 that expands through a turbine section 26 to drive a compressor section 24 of a main turbine engine 35. The disclosed vaporized ammonia based fuel may include ammonia, decomposition products of ammonia and/or a mixture of ammonia and decomposition products.

Ammonia (NH₃) does not contain carbon, but does have a fuel energy similar to alcohols such as methanol. Ammonia can also be transported and stored in liquid form at moderate pressure and temperature. For example, ammonia is a liquid at a pressure of about 8.5 atm and a temperature of 20°C. Alternatively, ammonia is a liquid at a pressure of 1 atm and a temperature of -33°C. These properties make ammonia attractive as alternate fuel that produces no carbon dioxide.

The disclosed engine assembly 20 uses heat to transform ammonia fuel in a liquid state into a vaporized ammonia based fuel. The vaporized ammonia based fuel 44 is expanded through a turbo-expander 40 to create shaft work and then delivered to the combustor 28 to generate additional power and shaft work utilized to generate a thrust producing flow 60 by the main engine 35.

The vaporized ammonia based fuel 44 is generated from a liquid ammonia fuel 42 stored in a fuel storage tank 34. The fuel storage tank 34 stores ammonia fuel 42 in a liquid state at a pressure and temperature that maintains the ammonia fuel 42 in a liquid state. The specific pressure and temperature required to maintain the ammonia fuel 42 in the liquid state may vary in different embodiments. In one disclosed example, the ammonia fuel 42 is maintained in the liquid state by storing at a temperature below about -33 °C and at a pressure at or below approximately 1 atm. In another disclosed embodiment, the ammonia fuel 42 is maintained in the fuel storage tank at a pressure of about 8.5 atm at a temperature of 20 °C. In another disclosed embodiment, the ammonia fuel is maintained in a liquid form at a pressure of about 1 atm and a temperature of about -33 °C. It should be appreciated that the specific temperature and pressure of ammonia may vary depending on application specific conditions.

Ammonia fuel 42 in a liquid state is pressurized to a first pressure by a liquid pump 36. The liquid pump 36 raises the pressure to a point where the ammonia fuel 42 is of a pressure greater than is needed for communication into the combustor 28. The pressurized liquid ammonia fuel 42 is then heated within a thermal transfer assembly 38. Thermal energy is drawn from various heat sources including heat producing engine systems as is schematically shown at 46. Heat producing systems can include electric systems, combustion systems, turbine systems, lubrication systems and air cooling systems. The work required to pressurize ammonia fuel 42 in a liquid state to a high pressure is relatively small compared to the work created by turbo-expanding the heated, gaseous ammonia (or its decomposition products) in the turbo-expander 40. As a result, the heat used to raise the temperature of the ammonia fuel produces additional work that can be captured to reduce the load on the main engine 35 that in turn enables more work or thrust to be produced from a given quantity of fuel. Additionally, heat producing systems onboard an aircraft may also be utilized to supply heat required to vaporize the ammonia fuel 42.

Ammonia fuel exhausted from the thermal transfer assembly 38 is in a gas state and is communicated to an inlet 50 of a turbo-expander 40 and exhausted through an outlet 52 to the combustor 28. The turbo-expander 40 drives a shaft 58 that is coupled though a mechanical coupling 56 to drive engine and/or aircraft systems as is schematically shown at 54. The engine and/or aircraft systems can include pumps, generators, gearboxes and any other systems that would normally be powered through a coupling to a main engine shaft.

In this disclosed example, the turbo-expander 40 is further coupled to drive a low pressure compressor section 22 of the main turbine engine 35. As is schematically shown, the high pressure compressor section 24 is coupled by way of shaft 25 to a high pressure turbine section 26. The high pressure compressor section 24, combustor 28 and high pressure turbine 26 provide a gas generator that produces the high energy exhaust flow 30 utilized to produce thrust. Any load placed on the main engine 35 reduces the amount of thrust that can be produced. The turbo-expander 40 uses energy in the vaporized ammonia based fuel 44 to reduce the amount of fuel required to produce the exhaust flow, thereby improving engine efficiency.

In the main engine 35, the thrust producing flow 60 can be directed through a nozzle 32 to generate thrust. Additionally, the exhaust gas flow 30 can be used to drive a turbine that in turn would drive a fan to produce a bypass flow that increases thrust. A controller 78 is provided to control operation of the pump 36 and the turbo-expander 40 to desired engine operating demands and conditions. It should be appreciated, that the main engine 35 is shown schematically and that other structures and engine configurations such as 2-spool, 3-spool and geared turbofan engines would benefit from this disclosure and are within the contemplation and scope of this disclosure. Moreover, a land based turbine engine would also benefit from application of the features of this disclosure.

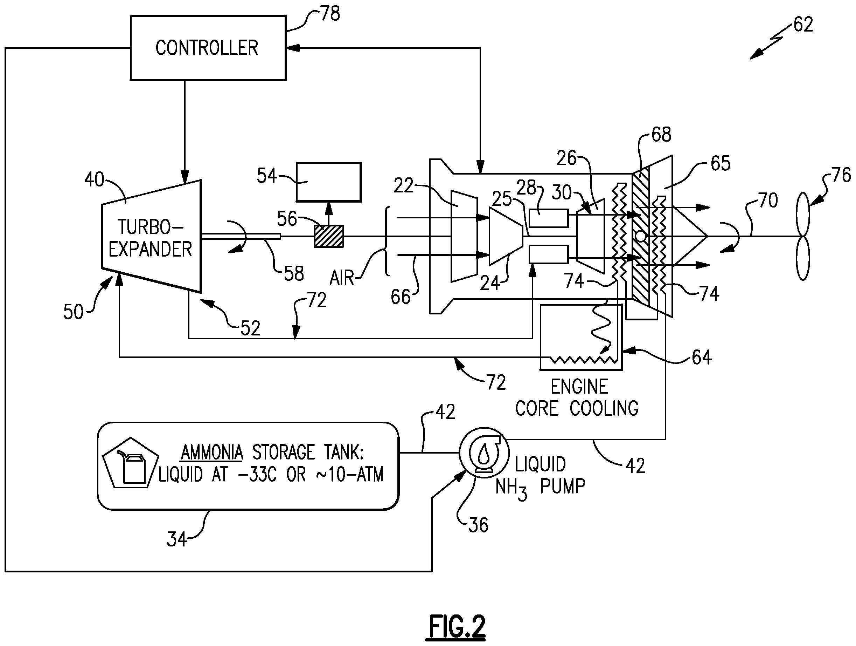

Referring to Figure 2, another example engine assembly 62 is schematically shown. The example engine assembly 62 includes the turbo-expander 40 that produces additional shaft work from the expansion of products from the cracking or decomposition of an ammonia based fuel 72. The engine assembly 62 includes a main engine 65 and a thermal transfer system 64 that utilizes heat from the high energy exhaust gas flow 30 generated in the combustor 28 to thermally decompose the ammonia fuel 42. In this example, the thermal transfer system 64 includes heat exchangers 74 in thermal communication with the exhaust gas flow 30 generated by the combustor 28. The higher heat energy generated aft of the combustor 28 elevates the temperature of the liquid ammonia fuel 42 and helps to decompose the ammonia into hydrogen and nitrogen according to the chemical equation:

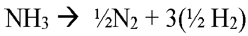

Depending upon the final temperature and pressure and the rate of decomposition in the presence of a catalyst, all of the ammonia or some portion of the ammonia may become cracked to form nitrogen and hydrogen. Cracking the ammonia fuel into nitrogen and hydrogen captures waste heat and provides an increased amount of work in the turbo-expander 40.

Moreover, because the cracking process is endothermic, the cracked fuel has increased fuel chemical energy and can therefore provide increased engine work output or thrust output without increased fuel flow and thereby improves engine fuel efficiency. The cracking process is endothermic and therefore additional heat absorption capacity becomes available at a given fuel temperature, thereby enabling greater heat absorption before the fuel temperature approaches the temperature of the heat source.

The cracking process increases the number of moles, with one mole of ammonia NH₃ becoming two moles of cracked gas, per NH₃ = ½ N₂ + 3(½ H₂), the resulting cracked gas occupies more volume and can provide more work output when turbo-expanded than can the original ammonia fuel for the same turbo-expander inlet temperature and pressure conditions. Because the cracked gas is less dense and has a higher specific heat capacity it can produce more work as enthalpy is extracted during turbo-expansion.

Furthermore, the cracking process changes the chemical composition of the ammonia fuel and thereby also changes its vapor-liquid equilibrium properties which provide greater turbo-expansion of the cracked gas. As appreciated, for a given pressure, the saturation temperature, where vapor begins to condense to liquid, is much lower for H₂ and N₂ than it is for NH₃. As a result, the conversion of some or all of the NH₃ to H₂ and N₂ allows a larger temperature drop and more work extraction across the turbo-expander 40 without crossing the vapor-liquid equilibrium line than would be possible with pure NH₃ as the working fluid in the turbo-expander.

This property can be advantageously used when cracking is included in the process by pumping the liquid fuel to a higher pressure before it is heated and cracked, thereby enabling a greater pressure and temperature drop during turbo-expansion. Cracking at least some of the ammonia fuel to form hydrogen further improves the flammability of the fuel, thus facilitating both ignition and stabilization of combustion in the main engine 65.

The example main engine 65 includes a free power turbine 68 that drives an output shaft 70. The free power turbine 68 is driven by expansion of the exhaust gas flow 30 aft of the high pressure turbine 24. The free power turbine 68 is not coupled to drive other structures of the main engine 65 and therefore may more efficiently drive accessory components or a propulsive fan 76, at their desired speeds, as is schematically shown. As appreciated, some portion of shaft power from a turbine is typically required to drive accessory components and/or other compressor sections such as the low pressure compressor 22. However, the turbo-expander 40 uses energy from the cracked ammonia based fuel 72 to drive an accessory component 54 and/or the low pressure compressor 22. Accordingly, power generated by the power turbine 68 to drive the shaft 70 is increased and the overall engine efficiency is improved.

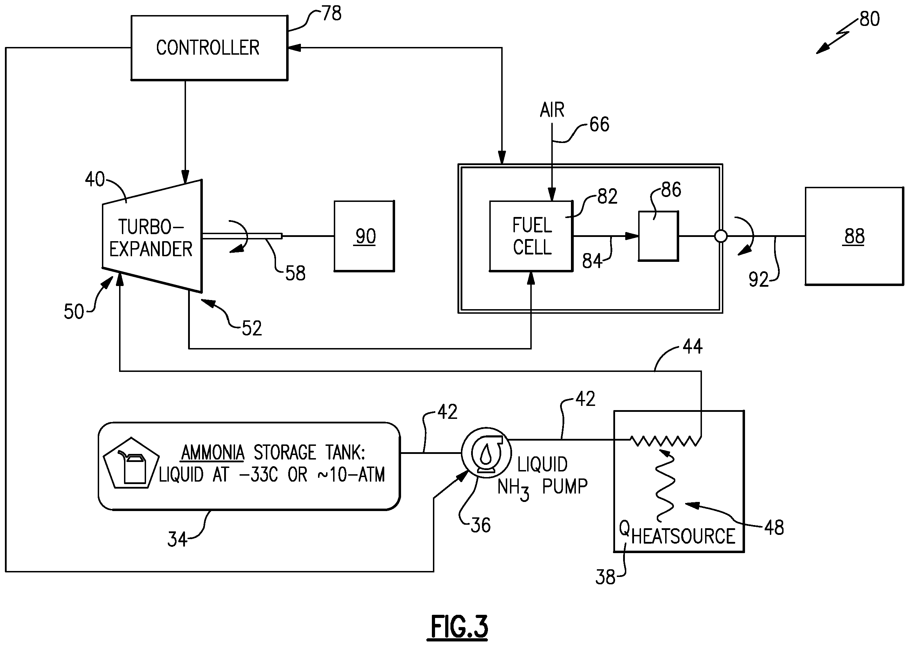

Referring to Figure 3, another example engine assembly 80 is schematically shown. The engine assembly 80 includes a fuel cell system 82 that is supplied with vaporized ammonia based fuel 44 to generate electric power schematically shown at 84. The fuel cell system 82 may be a direct-ammonia fuel cell, or a system that includes conversion of ammonia to hydrogen for use in a hydrogen fuel cell. The electric power 84 in this example is utilized to drive an electric motor 86. The electric motor 86 includes an output shaft 92 that drives an engine and/or aircraft system schematically indicated at 88. Vaporized ammonia based fuel 44 expands through the turbo-expander 40 to power the shaft 58. The shaft 58 can be coupled to drive various needed aircraft and/or engine accessories as is schematically shown at 90. The aircraft/engine accessory 90 may be a pump, a generator and/or any other structure utilizing rotary shaft power. The heat 48 for vaporizing the ammonia fuel 42 may be provided by any heat producing structure or device associated with an engine, fuel cell system, and/or aircraft. The disclosed engine assembly 80 may be utilized as a standalone engine or as an accessory unit in concert with a turbine engine to increase overall engine efficiency.

Accordingly, the disclosed assemblies provide for the advantageous use of ammonia fuel to improve engine efficiency and reduce carbon emission. The disclosed systems use advantageous properties of ammonia to convert ammonia fuel into useful work prior to combustion that enables improved engine efficiencies.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An energy extraction system, comprising:
an ammonia fuel storage tank assembly (34) configured to store a liquid ammonia fuel;
a thermal transfer assembly (38; 64) configured to transform the liquid ammonia fuel into a vaporized ammonia based fuel;
a turbo-expander (40) configured to expand the vaporized ammonia based fuel to extract work;
a low pressure compressor (22), the turbo-expander (40) coupled to drive the low pressure compressor (22); and
an energy conversion device including a combustor (28), the energy conversion device configured to use the vaporized ammonia based fuel from the turbo-expander (40) to generate a work output, wherein the low pressure compressor (22) is in flow communication with the combustor (28), the low pressure compressor (22) pressurizing air to be mixed with the vaporized ammonia based fuel in the combustor (28), and the vaporized ammonia based fuel is mixed with air and ignited in the combustor (28) to generate a high energy exhaust gas flow that is expanded through a turbine (26).

2. The energy extraction system as recited in claim 1, further comprising a liquid pump (36) configured to increase a pressure of the liquid ammonia fuel to a pressure greater than a pressure of the liquid ammonia fuel in the ammonia fuel storage tank (34).

3. The energy extraction system as recited in claim 1 or 2, wherein the ammonia fuel storage tank assembly (34) is configured to store the liquid ammonia fuel under a temperature and pressure that is different than an ambient temperature and pressure.

4. The energy extraction system as recited in any preceding claim, further comprising a liquid pump (36) configured to increase a pressure of the liquid ammonia fuel to a first pressure greater than a pressure of the liquid ammonia fuel in the ammonia fuel storage tank (34), wherein the first pressure is greater than a pressure of the vaporized ammonia based fuel communicated to the combustor (28).

5. The energy extraction system as recited in claim 3 or 4, wherein the thermal transfer assembly (38; 64) is in communication with a core flow to the turbine (26).

6. The energy extraction system as recited in any preceding claim, wherein the thermal transfer assembly (38; 64) is configured to heat the ammonia fuel to decompose at least a portion of the ammonia fuel into hydrogen and nitrogen.

7. The energy extraction system as recited in any preceding claim, wherein the thermal transfer assembly (38; 64) is disposed before the turbo-expander (40).

8. The energy extraction system as recited in any preceding claim, wherein the energy conversion device includes a fuel cell (82) configured to generate electric power to drive an electric motor (86).

9. A method of operating an energy extraction system, comprising:
transforming an ammonia fuel in a liquid form to a vaporized ammonia based fuel;
expanding the vaporized ammonia based fuel through a turbo-expander (40);
communicating the vaporized ammonia based fuel from the turbo-expander (40) to an energy conversion device, wherein the energy conversion device comprises a combustor (28) where the vaporized ammonia based fuel is mixed with air and ignited to generate a high energy exhaust gas flow, the turbo-expander (40) is coupled to a compressor (22) configured to pressurize air and communicate the pressurized air to the combustor (28); and
wherein the high energy exhaust flow is expanded through a turbine (26).

10. The method as recited in claim 9, including pressurizing the ammonia fuel in the liquid form to a first pressure greater than a pressure of the ammonia fuel stored in a fuel storage tank (34).

11. The method as recited in claim 9 or 10, including transforming the ammonia fuel within a thermal transfer assembly (38; 64) in thermal communication with a heat source, optionally including decomposing at least a portion of the ammonia fuel into hydrogen and nitrogen with exposure to heat in the thermal transfer assembly (38; 64).

12. The method as recited in any of claims 9 to 11, including transforming the ammonia fuel in liquid form within a thermal transfer assembly (38, 64) in thermal communication with a core flow.

## Patentansprüche

1. Energiegewinnungssystem, umfassend:
eine Ammoniakkraftstofflagertankbaugruppe (34), die dazu konfiguriert ist, einen flüssigen Ammoniakkraftstoff zu lagern;
eine Wärmeübertragungsbaugruppe (38; 64), die dazu konfiguriert ist, den flüssigen Ammoniakkraftstoff in einen verdampften ammoniakbasierten Kraftstoff umzuwandeln;
einen Turboexpander (40), der dazu konfiguriert ist, den verdampften ammoniakbasierten Kraftstoff zu expandieren, um Arbeit zu gewinnen;
einen Niederdruckverdichter (22), wobei der Turboexpander (40) dazu gekoppelt ist, den Niederdruckverdichter (22) anzutreiben; und
eine Energieumwandlungsvorrichtung, die eine Brennkammer (28) beinhaltet, wobei die Energieumwandlungsvorrichtung dazu konfiguriert ist, den verdampften ammoniakbasierten Kraftstoff aus dem Turboexpander (40) zu verwenden, um eine Arbeitsleistung zu erzeugen, wobei der Niederdruckverdichter (22) in Strömungsverbindung mit der Brennkammer (28) steht, der Niederdruckverdichter (22) Luft unter Druck setzt, die mit dem verdampften ammoniakbasierten Kraftstoff in der Brennkammer (28) zu vermischen ist, und der verdampfte ammoniakbasierte Kraftstoff mit Luft vermischt und in der Brennkammer (28) gezündet wird, um einen energiereichen Abgasstrom zu erzeugen, der durch eine Turbine (26) expandiert wird.

2. Energiegewinnungssystem nach Anspruch 1, ferner umfassend eine Flüssigkeitspumpe (36), die dazu konfiguriert ist, einen Druck des flüssigen Ammoniakkraftstoffs auf einen Druck zu erhöhen, der höher ist als ein Druck des flüssigen Ammoniakkraftstoffs in dem Ammoniakkraftstofflagertank (34).

3. Energiegewinnungssystem nach Anspruch 1 oder 2, wobei die Ammoniakkraftstofflagertankbaugruppe (34) dazu konfiguriert ist, den flüssigen Ammoniakkraftstoff bei einer Temperatur und einem Druck zu lagern, die sich von einer Umgebungstemperatur und einem Umgebungsdruck unterscheiden.

4. Energiegewinnungssystem nach einem der vorhergehenden Ansprüche, ferner umfassend eine Flüssigkeitspumpe (36), die dazu konfiguriert ist, einen Druck des flüssigen Ammoniakkraftstoffs auf einen ersten Druck zu erhöhen, der höher ist als ein Druck des flüssigen Ammoniakkraftstoffs in dem Ammoniakkraftstofflagertank (34), wobei der erste Druck höher ist als ein Druck des verdampften ammoniakbasierten Kraftstoffs, der in die Brennkammer (28) geleitet wird.

5. Energiegewinnungssystem nach Anspruch 3 oder 4, wobei die Wärmeübertragungsbaugruppe (38; 64) mit einem Kernstrom an die Turbine (26) in Verbindung steht.

6. Energiegewinnungssystem nach einem der vorhergehenden Ansprüche, wobei die Wärmeübertragungsbaugruppe (38; 64) dazu konfiguriert ist, den Ammoniakkraftstoff zu erwärmen, um mindestens einen Teil des Ammoniakkraftstoffs in Wasserstoff und Stickstoff zu zerlegen.

7. Energiegewinnungssystem nach einem der vorhergehenden Ansprüche, wobei die Wärmeübertragungsbaugruppe (38; 64) vor dem Turboexpander (40) angeordnet ist.

8. Energiegewinnungssystem nach einem der vorhergehenden Ansprüche, wobei die Energieumwandlungsvorrichtung eine Brennstoffzelle (82) beinhaltet, die dazu konfiguriert ist, elektrische Leistung zum Antreiben eines Elektromotors (86) zu erzeugen.

9. Verfahren zum Betreiben eines Energiegewinnungssystems, umfassend:
Umwandeln eines Ammoniakkraftstoffs in einer flüssigen Form in einen verdampften ammoniakbasierten Kraftstoff;
Expandieren des verdampften ammoniakbasierten Kraftstoffs durch einen Turboexpander (40);
Leiten des verdampften ammoniakbasierten Kraftstoffs aus dem Turboexpander (40) in eine Energieumwandlungsvorrichtung, wobei die Energieumwandlungsvorrichtung eine Brennkammer (28) umfasst, in der der verdampfte ammoniakbasierte Kraftstoff mit Luft vermischt und gezündet wird, um einen energiereichen Abgasstrom zu erzeugen, wobei der Turboexpander (40) mit einem Verdichter (22) gekoppelt ist, der dazu konfiguriert ist, Luft unter Druck zu setzen und die unter Druck stehende Luft in die Brennkammer (28) zu leiten; und
wobei der energiereiche Abgasstrom durch eine Turbine (26) expandiert wird.

10. Verfahren nach Anspruch 9, beinhaltend Unterdrucksetzen des Ammoniakkraftstoffs in der flüssigen Form auf einen ersten Druck, der höher ist als der Druck des in einem Kraftstofflagertank (34) gelagerten Ammoniakkraftstoffs.

11. Verfahren nach Anspruch 9 oder 10, beinhaltend Umwandeln des Ammoniakkraftstoffs innerhalb einer Wärmeübertragungsbaugruppe (38; 64), die in thermischer Verbindung mit einer Wärmequelle steht, optional beinhaltend Zerlegen von mindestens einem Teil des Ammoniakkraftstoffs in Wasserstoff und Stickstoff unter Einwirkung von Wärme in der Wärmeübertragungsbaugruppe (38; 64).

12. Verfahren nach einem der Ansprüche 9 bis 11, beinhaltend Umwandeln des Ammoniakkraftstoffs in flüssige Form innerhalb einer Wärmeübertragungsbaugruppe (38, 64), die in thermischer Verbindung mit einem Kernstrom steht.

## Revendications

1. Système d'extraction d'énergie, comprenant :
un ensemble de réservoir de stockage de combustible d'ammoniac (34) configuré pour stocker un combustible d'ammoniac liquide ;
un ensemble de transfert thermique (38 ; 64) configuré pour transformer le combustible d'ammoniac liquide en un combustible à base d'ammoniac vaporisé ;
un turbo-détendeur (40) configuré pour détendre le combustible à base d'ammoniac vaporisé afin d'extraire du travail ;
un compresseur basse pression (22), le turbo-détendeur (40) étant couplé pour entraîner le compresseur basse pression (22) ; et
un dispositif de conversion d'énergie incluant une chambre de combustion (28), le dispositif de conversion d'énergie étant configuré pour utiliser le combustible à base d'ammoniac vaporisé provenant du turbo-détendeur (40) pour générer une sortie de travail, dans lequel le compresseur basse pression (22) est en communication d'écoulement avec la chambre de combustion (28), le compresseur basse pression (22) pressurisant l'air à mélanger avec le combustible à base d'ammoniac vaporisé dans la chambre de combustion (28), et le combustible à base d'ammoniac vaporisé est mélangé à l'air et enflammé dans la chambre de combustion (28) pour générer un flux de gaz d'échappement à haute énergie qui est détendu à travers une turbine (26).

2. Système d'extraction d'énergie selon la revendication 1**,** comprenant également une pompe à liquide (36) configurée pour augmenter une pression du combustible d'ammoniac liquide à une pression supérieure à une pression du combustible d'ammoniac liquide dans le réservoir de stockage de combustible d'ammoniac (34).

3. Système d'extraction d'énergie selon la revendication 1 ou 2, dans lequel l'ensemble de réservoir de stockage de combustible d'ammoniac (34) est configuré pour stocker le combustible d'ammoniac liquide à une température et une pression différentes de la température et de la pression ambiantes.

4. Système d'extraction d'énergie selon une quelconque revendication précédente, comprenant également une pompe à liquide (36) configurée pour augmenter une pression du combustible d'ammoniac liquide à une première pression supérieure à une pression du combustible d'ammoniac liquide dans le réservoir de stockage de combustible d'ammoniac (34), dans lequel la première pression est supérieure à une pression du combustible à base d'ammoniac vaporisé acheminé dans la chambre de combustion (28).

5. Système d'extraction d'énergie selon la revendication 3 ou 4, dans lequel l'ensemble de transfert thermique (38 ; 64) est en communication avec un flux central vers la turbine (26).

6. Système d'extraction d'énergie selon une quelconque revendication précédente, dans lequel l'ensemble de transfert thermique (38 ; 64) est configuré pour chauffer le combustible d'ammoniac pour décomposer au moins une partie du combustible d'ammoniac en hydrogène et en azote.

7. Système d'extraction d'énergie selon une quelconque revendication précédente, dans lequel l'ensemble de transfert thermique (38 ; 64) est disposé avant le turbo-détendeur (40).

8. Système d'extraction d'énergie selon une quelconque revendication précédente, dans lequel le dispositif de conversion d'énergie inclut une pile à combustible (82) configurée pour générer de l'énergie électrique pour entraîner un moteur électrique (86).

9. Procédé de fonctionnement d'un système d'extraction d'énergie, comprenant :
la transformation d'un combustible d'ammoniac sous forme liquide en un combustible à base d'ammoniac vaporisé ;
la détente du combustible à base d'ammoniac vaporisé à travers un turbo-détendeur (40) ;
l'acheminement du combustible à base d'ammoniac vaporisé du turbo-détendeur (40) vers un dispositif de conversion d'énergie, dans lequel le dispositif de conversion d'énergie comprend une chambre de combustion (28) dans laquelle le combustible à base d'ammoniac vaporisé est mélangé à l'air et enflammé pour générer un flux de gaz d'échappement à haute énergie, le turbo-détendeur (40) étant couplé à un compresseur (22) configuré pour pressuriser l'air et acheminer l'air sous pression vers la chambre de combustion (28) ; et
dans lequel le flux d'échappement à haute énergie est détendu à travers une turbine (26).

10. Procédé selon la revendication 9, incluant la mise sous pression du combustible d'ammoniac sous forme liquide à une première pression supérieure à une pression du combustible d'ammoniac stocké dans un réservoir de stockage de combustible (34).

11. Procédé selon la revendication 9 ou 10, incluant la transformation du combustible d'ammoniac dans un ensemble de transfert thermique (38 ; 64) en communication thermique avec une source de chaleur, incluant éventuellement la décomposition d'au moins une partie du combustible d'ammoniac en hydrogène et azote avec exposition à la chaleur dans l'ensemble de transfert thermique (38 ; 64).

12. Procédé selon l'une quelconque des revendications 9 à 11, incluant la transformation du combustible ammoniac sous forme liquide dans un ensemble de transfert thermique (38, 64) en communication thermique avec un flux central.
